Europäisches Patentamt

European Patent Office

Office européen des brevets

(19)

(11)     EP 1 252 786 B1

(12)     EUROPEAN PATENT SPECIFICATION

(45) Date of publication and mention
of the grant of the patent:
**17.12.2003  Bulletin 2003/51**

(51) Int Cl.[7]: **H04Q 7/36**

(86) International application number:
**PCT/FI01/00078**

(21) Application number: **01903826.4**

(22) Date of filing: **29.01.2001**

(87) International publication number:
**WO 01/056318 (02.08.2001 Gazette 2001/31)**

(54) **CHANNEL ALLOCATION IN MOBILE COMMUNICATION SYSTEM**

KANALZUWEISUNG IN EINEM MOBILKOMMUNIKATIONSSYSTEM

ATTRIBUTION D'UN CANAL DANS UN SYSTEME DE COMMUNICATION MOBILE

(84) Designated Contracting States:
**AT BE CH CY DE DK ES FI FR GB GR IE IT LI LU
MC NL PT SE TR**

(30) Priority: **31.01.2000  FI  20000198**

(43) Date of publication of application:
**30.10.2002  Bulletin 2002/44**

(73) Proprietor: **TeliaSonera Finland Oyj
00510 Helsinki (FI)**

(72) Inventors:
• **JAAKKOLA, Jussi
FIN-01200 Vantaa (FI)**
• **HEIKKILÄ, Tomi
FIN-02320 Espoo (FI)**

• **ILOLA, Esko
FIN-10160 Degerby (FI)**
• **LAINE, Hannu
FIN-12240 Hikiä (FI)**
• **LAASONEN, Mika
FIN-00320 Helsinki (FI)**
• **VÄNTTINEN, Jari
FIN-00210 Helsinki (FI)**

(74) Representative: **Holmström, Stefan Mikael
Oy Kolster Ab,
Iso Roobertinkatu 23,
P.O. Box 148
00121 Helsinki (FI)**

(56) References cited:
**EP-A2- 0 847 213          US-A- 5 839 074**

**Description**

The invention relates to capacity management in a mobile communication network, and particularly to allocation of frequencies to cells of a frequency-divisional mobile communication network.

One object of network design is to achieve as good coverage area as possible in a mobile communication system. In prior art mobile communication systems, such as the GSM system (Global System for Mobile Communication), the frequencies available are allocated to cells according to different models to minimize interference between connections and maximize the network capacity. Cellular networks employ a reproduction pattern which defines how frequently channels are reused in the cells. This means that the same or adjacent frequencies should not be used too frequently. Design of reproduction patterns requires careful planning of the use of radio frequencies. The results are also tested by measurements during the introduction phase of a network. When the use of mobile phones increases, it is often also necessary to increase the network capacity and the number of frequencies available. Higher transmission power is employed in the country than in the urban environment. On the other hand, reflection caused by buildings, for example, is more common in the cities. For these reasons, ten surrounding cells, for example, often need to be taken into account in frequency allocation both in the country and in the city.

A problem related to the system described above is that the frequency spectrum available is very limited. For this reason, increase of the network capacity can result in high design and measurement costs. When a strictly defined reproduction pattern has to be used, the network will also become interference limited, i.e. the interference level of the network and e.g. the number of broken connections increase as the network becomes more loaded.

The quality of cells may vary widely in such an interference limited network.

Previously there is also known from US-A-5 839074 a solution for allocating frequencies to cells. The analysis is in this solution restricted to those cells for whom frequency channels are allocated, and the analysis proceeds in each situation according to a fixed path where each decision is made by selecting automatically the frequency which has the lowest interference value in that particular situation. Thus, for instance, in the first selection the frequency with the lowest interference value is automatically selected. This naturally narrows down the available options in the later selections. Such a solution has the disadvantage that it might lead to a frequency plan which is not optimal when considering the entire system.

The object of the invention is to solve the above-mentioned problems and provide a solution for taking the whole mobile communication network or an area of it better into account. In that case the network capacity can be increased within the scope of the frequency spectrum available by minimizing interference on the connections. The invention allows allocation of all cell frequencies or only some of the cell frequencies and allows search for new frequencies for the cell in addition to the existing frequencies. The object of the invention is achieved with a method of allocating frequencies to the cells in a mobile communication system, the method comprising determining the amount of interference between the cells and selecting the frequencies so that the cells do not substantially interfere with one another. The method is characterized in that the method comprises steps of selecting first cells to which frequencies are allocated, selecting second surrounding cells which interfere with the first cells, and whose frequency allocation remains unchanged during the frequency allocation for the first cells, determining a desired number of frequencies in each first cell, generating for the first cells a pre-determined number of frequencies which form a frequency proposal, calculating for each frequency generated an interference value which takes the interference caused by the first and the second cells into account, calculating a quality value for the frequency proposal using the interference values of the frequencies, the quality value being a comparison value for comparing different frequency proposals with one another, repeating the step of frequency generation, the step of calculating interference values and the step of calculating the quality value to generate several frequency proposals and to calculate interference values and quality values for these frequency proposals, comparing the frequency proposals generated with one another, and selecting the frequency proposal with the best quality value.

The invention also relates to a planning system of a mobile communication network in which the method according to the invention can be applied. The system of the invention comprises at least generation means for generating frequencies for first cells, for which new frequencies are searched in the area of the frequency spectrum available. The system of the invention is characterized in that the system also comprises calculation means of interference value for determining the interference caused by the first cells and second cells near to the first cells by calculating an interference value for each frequency generated, said second cells being cells whose frequency allocation remains unchanged during the frequency allocation for the first cells, calculation means of quality value for calculating a quality value of the frequency proposal using the interference values of the frequencies, and controlling means for controlling the generation means, calculation means of interference value and calculation means of quality value to generate several frequency proposals, to calculate interference values and quality values of these proposals, to compare the quality values of the frequency proposals and to select the frequency proposal with the best quality value.

The invention is based on allocation of frequencies to several cells at the same time so as to minimize interference between the cells. Frequencies are allocated employing an automated iteration method, which comprises generating several alternative frequency proposals and determining the quality value which describes the interference level of the frequency proposals. The number of iteration rounds can be restricted in advance so that iteration ends as pre-determined conditions are fulfilled. Finally, the frequency proposal with the best quality value is selected. Thus the major advantages of the invention are that the amount of interference decreases and the capacity of the mobile communication network can be utilized efficiently since the very limited number of frequencies available is allocated optimally.

In an embodiment of the method according to the invention the number of iteration rounds is restricted by defining the maximum number of frequency proposals and/or the maximum interference level of a frequency proposal in advance. This allows to avoid an unnecessarily long generation and calculation process.

In a second embodiment of the method according to the invention frequencies are generated randomly for the cells. This yields very different frequency proposals, of which the best one is selected for use by comparing the quality values of the proposals.

In an embodiment of the system according to the invention, the system comprises means for measuring the real interference in the areas of different cells and means for correcting the calculated frequency proposal on the basis of the measurements performed. Thus the frequency proposal obtained may even be better than the result achieved by calculations.

In a second embodiment of the system according to the invention, the system comprises a database in which maps and geographic information related to the cell's coverage area are maintained. This information is specified and updated on a constant basis to provide calculated interference values which correspond to the real values as closely as possible. The information in the database may be related e.g. to the terrain elevation and location of buildings and forests.

The preferred embodiments of the method and system according to the invention are disclosed in the dependent claims.

In the following, the invention will be described by examples with reference to the accompanying figures, in which

Figure 1 is a flow chart illustrating a method according to the invention, and
Figure 2 is a block diagram illustrating a system according to the invention.

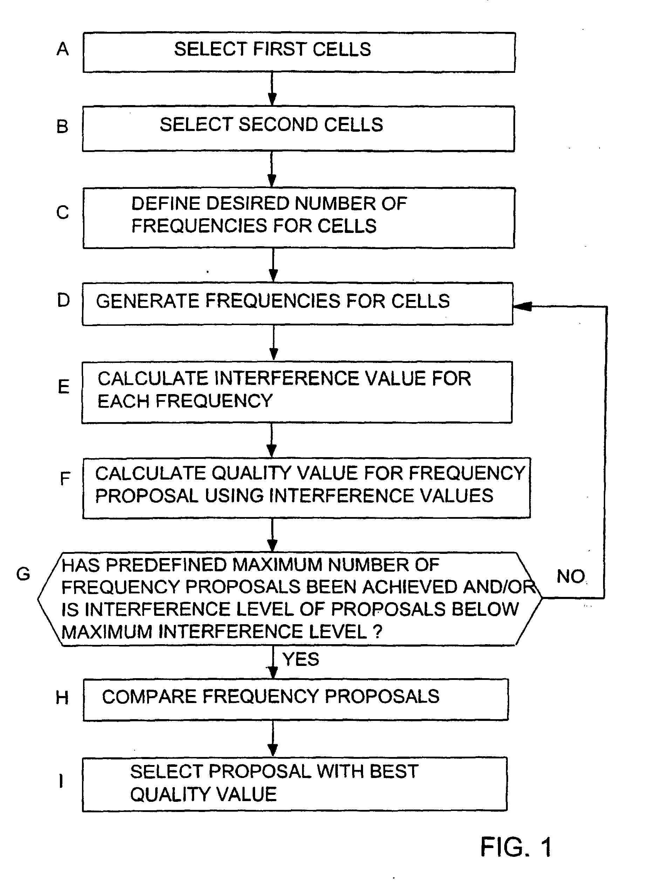

Figure 1 is a flow chart illustrating the method according to the invention. In step A first cells are selected to which new frequencies are allocated. In step B second cells are selected which are near the first cells and interfere with them. Frequencies are not allocated to the second cells but they are taken into account in the calculation of interference values for the frequencies to be allocated to the first cells. In step C the number of frequencies to be allocated to each first cell is determined. The number of frequencies available is very limited. In Finland, for example, 30 frequencies may be available for one GSM operator. In step D new frequencies are generated for the first cells. All the frequencies generated form together a frequency proposal. Generation can be performed employing different algorithms, but preferably frequencies can also be generated randomly.

In handling of frequencies it is essential how the frequencies are located with respect to one another, i.e. whether they are e.g. in the same mast or in the same cell, and what the physical distance is between them. The same frequencies always interfere with each other most and adjacent frequencies less. The larger the distance between the frequencies, the less they interfere with one another. The amount of traffic through the cell also has to be considered.

In step E an interference value is calculated for each frequency generated. The value represents the interference caused to the frequency in question by the first and the second cells. An interference value can be calculated for frequency f of cell s by the formula

$$h_{sf} = \sum_{s} f(H_{matr}, H_{et}, H_{kan}),$$

where all cells S around cell s are taken into account. Parameter $H_{matr}$ represents an interference matrix, i.e. interference ratios between the cells, parameter $H_{et}$ represents the distance between the cells and parameter $H_{kan}$ contains information on the frequencies allocated. The interference matrix tells the interference ratio between pairs of cells, which can be obtained by the formula

$$\sum_{P} f\left(\frac{C}{I}\right),$$

where the interference caused by the second cell B to the whole service area P of cell A is calculated. The interference ratio C/I at a certain point j of the cell pairs can be calculated by the formula

$$\frac{C}{I} = \frac{L_A}{L_B},$$

where $L_A$ and $L_B$ represent field strengths of the cells in question at a certain point i. The field strength can be calculated from one cell at point i by the formula

$$L = L_E + L_K + L_P,$$

where $L_E$ is the path attenuation, which can be calculated e.g. by the formula

$$L(dB) = 32,4 + 20 \log f + 20 \log d_i,$$

where f is the frequency transmitted by the cell and $d_i$ is the distance from the cell to point i. Parameter $L_K$ takes the attenuation resulting from the terrain elevation into account, and $L_P$ takes the surface quality of the terrain into account. For example, buildings and forest in the area affect the terrain elevation and the surface quality. Different calculation models can be applied to different environments. For example, different formulae can be used for the countryside and for the densely built urban environment. The transmission power as well as parameters of antennas and mobile stations also need to be considered in the calculation of the field strength. Calculation of interference value is described in Penttinen, J: GSM-tekniikka - järjestelmän toiminta, palvelut ja suunnittelu, 1999, chapters 13 and 14.

In step F a quality value is calculated for the frequency proposal on the basis of the interference values. The quality value is a comparison value for comparing different frequency proposals. Various methods, such as neural networks or fuzzy logic, can be used for determining the quality value, but the highest interference value of the frequencies generated can also be used as a quality value representing the frequency proposal. If one interference value $h_{ij}$ is obtained for each frequency in step E, the quality value is then

*max* $h_{ij}$

In step G it is checked whether the conditions defined for the quality value in advance have been fulfilled. If the predefined maximum number of frequency proposals has been achieved or the interference level of the frequency proposal is below the maximum interference level, generation of frequency proposals is finished. Here the maximum interference level refers to the interference level of the whole frequency proposal described by the quality value. If the highest interference value of the frequency proposal is used as the quality value, as exemplified above, one condition for finishing generation can be that the highest interference value of the frequency proposal must be below a certain level. If the conditions have not been fulfilled, steps D to F are repeated until the conditions are fulfilled, i.e. new frequency proposals are generated and interference and quality values are calculated for them. After the conditions have been fulfilled, we move to step H, where the frequency proposals are compared with one another. In practice, this may mean comparison of quality values only, for example.

In practice all steps A to I can be performed by one or more computer programs.

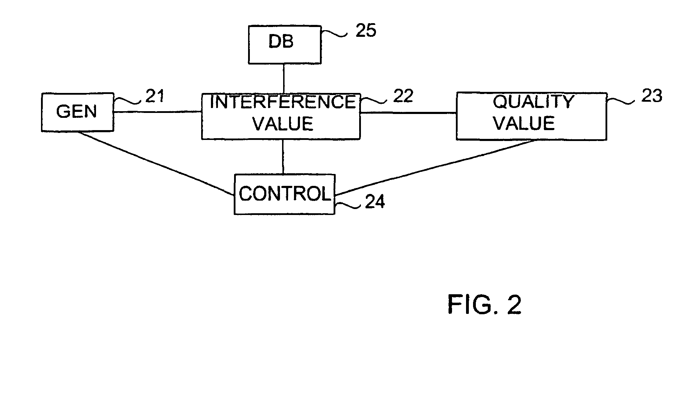

Figure 2 is a block diagram of the system according to the invention. The system shown in the figure comprises frequency generation means 21, calculation means 22 of interference values, calculation means 23 of quality value and control means 24 which control all the above-mentioned means. The system illustrated further comprises a database 25 in which information on the cells is maintained, such as maps and geographic information. The generation means 21 generate a predetermined number of frequencies for the cells. The calculation means 22 of interference value calculate an interference value for each frequency generated. Maps and geographic information obtained from the database 25 are used in the calculation of the interference value. On the basis of the interference values the calculation means 23 of quality value calculate a quality value for the whole frequency proposal. The control means 24 are also used for comparing the quality values obtained and for selecting the frequency proposal with the best quality value. In practice all means 21 to 25 can be :mplemented in one or more computers by means of one or more computer programs.

It is to be understood that the above description and the related figures are only intended to illustrate the present invention. It will be obvious to a person skilled in the art that the invention can be modified in various ways without deviating from the scope of the invention defined in the appended claims.

**Claims**

1. A method of allocating frequencies to cells in a mobile communication system, the method comprising determining the amount of interference between the cells and selecting the frequencies so that the cells do not substantially interfere with one another, **characterized in that** the method comprises the following steps of:

   (A) selecting first cells to which frequencies are allocated,
   (B) selecting second surrounding cells which interfere with the first cells, and whose frequency allocation remains unchanged during the frequency allocation for the first cells,
   (C) defining a desired number of frequencies in each first cell,
   (D) generating for the first cells a predetermined number of frequencies, which form a frequency proposal,
   (E) calculating for each frequency generated an interference value, which takes the interference caused by the first and the second cells into account,
   (F) calculating a quality value for the frequency proposal on the basis of the interference values of the frequencies, the quality value being a comparison value for comparing different frequency proposals with one another,

(G) repeating steps D to F to generate several frequency proposals and to calculate the interference values and quality value of these frequency proposals,

(H) comparing the frequency proposals generated with one another, and

(I) selecting the frequency proposal with the best quality value.

2. A method according to claim 1, **characterized by** determining, before generating frequencies, the maximum number of frequency proposals to be generated and/or the maximum interference level of the resulting frequency proposal and repeating generation of frequency proposals and calculation of interference values and quality values until the predefined maximum number of frequency proposals is obtained and/or the interference level is below the maximum interference level defined for the frequency proposal.

3. A method according to claim 1 or 2, **characterized by** generating new frequencies randomly for the first cells.

4. A method according to any one of claims **1** to 3, **characterized by** considering in the calculation of the interference value the distances between the cells, the amount of traffic through the cell, the differences between the frequencies used, the attenuation caused by the terrain elevation and surface quality, the transmission power, the antennas used in the mobile communication network and the receiving parameters of mobile stations.

5. A system which comprises at least

generation means (21) for generating frequencies for first cells, for which new frequencies are searched in the area of the frequency spectrum available, **characterized in that** the system also comprises

calculation means (22) of interference value for determining the interference caused by the first cells and second cells near the first cells by calculating an interference value for each frequency generated, said second cells being cells whose frequency allocation remains unchanged during the frequency allocation for the first cells,

calculation means (23) of quality value for calculating a quality value on the basis of interference values of the frequencies, and

control means (24) for controlling the generation means (21), the calculation means (22) of interference value and the calculation means (23) of quality value to generate several frequency proposals, to calculate interference values and quality values of these frequency proposals, to compare the quality values of the frequency proposals and to select the frequency proposal with the best quality value.

6. A system according to claim 5, **characterized in that** the system also comprises means for measuring interference between the cells and means for correcting a result obtained by calculations on the basis of the measurements.

7. A system according to claim 5 or 6, **characterized in that** the system also comprises a database (25) in which maps and geographic information related to the coverage area of the cells are stored, the means for calculating interference value being responsive to this information when the interference value is calculated.

**Patentansprüche**

1. Verfahren zur Zuweisung von Frequenzen an Zellen in einem mobilen Kommuniationssystem, das aufweist:

Bestimmen der Größe der Interferenz zwischen den Zellen und Auswählen der Frequenzen, so daß die Zellen im wesentlichen nicht miteinander interferieren, **dadurch gekennzeichnet, daß** das Verfahren die folgenden Schritte aufweist:

(A) Auswählen erster Zellen, denen Frequenzen zugewiesen werden,

(B) Auswählen zweiter umgebender Zellen, die mit den ersten Zellen interferieren und deren Frequenzzuweisung während der Frequenzzuweisung der ersten Zellen unverändert bleibt,

(C) Definieren einer gewünschten Anzahl an Frequenzen in jeder ersten Zelle,

(D) Erzeugen einer vorbestimmten Anzahl an Frequenzen, die einen Frequenzvorschlag bilden, für die ersten Zellen,

(E) Berechnen eines Interferenzwertes, der die durch die ersten und zweiten Zellen verursachte Interferenz berücksichtigt, für jede erzeugte Frequenz,

(F) Berechnen eines Qualitätswertes für den Frequenzvorschlag auf der Grundlage der Interferenzwerte der Frequenzen, wobei der Qualitätswert ein Vergleichswert zum Vergleichen unterschiedlicher Frequenzvorschläge miteinander ist,

(G) Wiederholen der Schritte (D) bis (F), um verschiedene Frequenzvorschläge zu erzeugen und die Interferenzwerte und Qualitätswerte dieser Frequenzvorschläge zu berechnen,

(H) Vergleichen der erzeugten Frequenzvorschläge miteinander, und

(I) Auswählen des Frequenzvorschlags mit dem besten Qualitätswert.

2. Verfahren nach Anspruch 1, **gekennzeichnet durch** Bestimmen der maximalen Anzahl der zu erzeugenden Frequenzvorschläge und/oder des maximalen Interferenzpegels des resultierenden Frequenzvorschlags und Wiederholen der Erzeugung von Frequenzvorschlägen und Berechnung von Interferenzwerten und Qualitätswerten bis die vordefinierte maximale Anzahl an Frequenzvorschlägen erhalten wird und/oder der Interferenzpegel unterhalb des für den Frequenzvorschlag definierten maximalen Interferenzpegels liegt, bevor die Frequenzen erzeugt werden.

3. Verfahren nach Anspruch 1 oder 2, **gekennzeichnet durch** Erzeugen neuer Frequenzen zufällig für die ersten Zellen.

4. Verfahren nach einem der Ansprüche 1 bis 3, **gekennzeichnet durch** Berücksichtigen der Abstände zwischen den Zellen, der Menge des Verkehrs **durch** die Zellen, der Unterschiede zwischen den verwendeten Frequenzen, der **durch** die Geländeerhöhung und Oberflächenqualität verursachte Dämpfung, der Übertragungsleistung, der in dem mobilen Kommunikationsnetzwerk verwendeten Antennen und der Empfangsparameter der mobilen Stationen bei der Berechnung der Interferenzwerte.

5. System, das zumindest aufweist:

eine Erzeugungseinrichtung (21) zum Erzeugen von Frequenzen für erste Zellen, für die neue Frequenzen im Bereich des verfügbaren Frequenzspektrums gesucht werden, **dadurch gekennzeichnet, daß** das System außerdem aufweist:

eine Berechnungseinrichtung (22) für Interferenzwerte zur Bestimmung der durch die ersten Zellen und in der Nähe der ersten Zellen befindlichen zweiten Zellen verursachten Interferenz durch Berechnen eines Interferenzwertes für jede erzeugte Frequenz, wobei die zweiten Zellen Zellen sind, deren Frequenzzuweisung während der Frequenzzuweisung für die ersten Zellen unverändert bleibt, eine Berechnungseinrichtung. (23) für Qualitätswerte zur Berechnung eines Qualitätswertes auf der Grundlage von Interferenzwerten der Frequenzen, und

eine Steuereinrichtung (24) zur Steuerung der Erzeugungseinrichtung (21), der Berechnungseinrichtung (22) für Interferenzwerte und der Berechnungseinrichtung (23) für Qualitätswerte, um verschiedene Frequenzvorschläge zu erzeugen, Interferenzwerte und Qualitätswerte dieser Frequenzvorschläge zu berechnen, die Qualitätswerte der Frequenzvorschläge zu vergleichen und den Frequenzvorschlag mit dem besten Qualitätswert auszuwählen.

6. System nach Anspruch 5, **dadurch gekennzeichnet, daß** das System außerdem eine Einrichtung zum Messen einer Interferenz zwischen den Zellen und eine Einrichtung zum Korrigieren eines durch die Berechnungen auf der Grundlage der Messungen erhaltenen Ergebnisses aufweist.

7. System nach Anspruch 5 oder 6, **dadurch gekennzeichnet, daß** das System außerdem eine Datenbank (25) aufweist, in der Tabellen und geographische Informationen, die den Abdeckungsbereich der Zellen betreffen, gespeichert sind, wobei die Einrichtung zur Berechnung eines Interferenzwertes auf diese Informationen reagiert, wenn der Interferenzwert berechnet wird.

### Revendications

1. Procédé d'allocation de fréquences à des cellules dans un système de communication mobile, le procédé comprenant la détermination de la quantité d'interférence entre les cellules et la sélection des fréquences de telle sorte que les cellules n'interfèrent pas sensiblement les unes avec les autres, **caractérisé en ce que** le procédé comprend les étapes consistant à :

(A) sélectionner les premières cellules auxquelles sont allouées les fréquences,

(B) sélectionner les deuxièmes cellules avoisinantes qui interfèrent avec les premières cellules, et dont l'allocation de fréquence reste inchangée pendant l'allocation de fréquence destinée aux premières cellules ;

(C) définir un nombre souhaité de fréquences dans chaque première cellule ;

(D) générer pour les premières cellules un nombre prédéterminé de fréquences, qui forment une proposition de fréquence ;

(E) calculer pour chaque fréquence générée une valeur d'interférence, qui prend en compte l'interférence provoquée par les premières et deuxièmes cellules ;

(F) calculer une valeur qualitative pour la proposition de fréquence sur la base des valeurs d'interférence des fréquences, la valeur qualitative étant une valeur comparative permettant de comparer différentes propositions de fréquence les unes aux autres ;

(G) répéter les étapes D à F pour générer plusieurs propositions de fréquence et calculer les valeurs d'interférence et la valeur qualitative de ces propositions de fréquence,

(H) comparer les propositions de fréquence générées les unes aux autres,

(I) sélectionner la proposition de fréquence présentant la meilleure valeur qualitative.

2. Procédé selon la revendication 1, **caractérisé en ce qu'**on détermine, avant de générer les fréquences, le nombre maximal de propositions de fréquence devant être générées et / ou le niveau d'interférence maximal de la proposition de fréquence résultante et **en ce qu'**on répète la génération de propositions de fréquence et on calcule les valeurs d'interférence et les valeurs qualitatives jusqu'à ce que le nombre maximal prédéfini de propositions de fréquence soit obtenu et /ou que le niveau d'interférence soit inférieur au niveau d'interférence maximal défini pour la proposition de fréquence.

3. Procédé selon la revendication 1 ou 2, **caractérisé en ce qu'**on génère de manière aléatoire de nouvelles fréquences pour les premières cellules.

4. Procédé selon l'une quelconque des revendications 1 à 3, **caractérisé en ce qu'**on considère, dans le calcul de la valeur d'interférence, les distances entre les cellules, la quantité de trafic au travers de la cellule, les différences entre les fréquences utilisées, l'atténuation provoquée par l'élévation de terrain et la qualité de la surface, la puissance de transmission, les antennes utilisées dans le réseau de communication mobile et les paramètres de réception de stations mobiles.

5. Système qui comprend au moins

un moyen générateur (21) pour générer des fréquences destinées aux premières cellules, pour lesquelles on recherche de nouvelles fréquences dans la zone du spectre de fréquence disponible, **caractérisé en ce que** le système comprend également

un moyen de calcul (22) de valeur d'interférence pour déterminer l'interférence provoquée par les premières cellules et deuxièmes cellules à proximité des premières cellules en calculant une valeur d'interférence pour chaque fréquence générée, lesdites deuxièmes cellules étant des cellules dont l'allocation de fréquence reste inchangée pendant l'allocation de fréquence destinée aux premières cellules,

un moyen de calcul (23) de la valeur qualitative pour calculer une valeur qualitative sur la base des valeurs d'interférence des fréquences, et

un moyen de commande (24) pour commander le moyen générateur (21), le moyen de calcul (22) de la valeur d'interférence et le moyen de calcul (23) de la valeur qualitative afin de générer plusieurs propositions de fréquence, de calculer les valeurs d'interférence et les valeurs qualitatives de ces propositions de fréquence, de comparer les valeurs qualitatives des propositions de fréquence et de sélectionner la proposition de fréquence présentant la meilleure valeur qualitative.

6. Système selon la revendication 5, **caractérisé en ce que** le système comprend également un moyen de mesure d'interférence entre les cellules et un moyen de correction d'un résultat obtenu par voie de calcul sur la base des mesures.

7. Système selon l'une quelconque des revendications 5 ou 6, **caractérisé en ce que** le système comprend également une base de données (25) stockant les cartes et informations géographiques concernant la zone de couverture des cellules, le moyen de calcul de l'interférence étant sensible à ces informations lorsque la valeur d'interférence est calculée.

A  SELECT FIRST CELLS

B  SELECT SECOND CELLS

C  DEFINE DESIRED NUMBER OF
   FREQUENCIES FOR CELLS

D  GENERATE FREQUENCIES FOR CELLS

E  CALCULATE INTERFERENCE VALUE FOR
   EACH FREQUENCY

F  CALCULATE QUALITY VALUE FOR FREQUENCY
   PROPOSAL USING INTERFERENCE VALUES

G  HAS PREDEFINED MAXIMUM NUMBER OF
   FREQUENCY PROPOSALS BEEN ACHIEVED AND/OR
   IS INTERFERENCE LEVEL OF PROPOSALS BELOW
   MAXIMUM INTERFERENCE LEVEL ?

NO

YES

H  COMPARE FREQUENCY PROPOSALS

I  SELECT PROPOSAL WITH BEST
   QUALITY VALUE

FIG. 1

FIG. 2